# EUROPEAN PATENT APPLICATION

(11) **EP 4 270 716 A1**
(43) Date of publication of application: **01.11.2023**
(21) Application number: 20966838.3
(22) Date of filing: 22.12.2020
(51) Int. Cl.: H02J 7/00

(54) **BATTERY SYSTEM, CHARGING DEVICE, AND CHARGING METHOD**

(71) Applicant: TERAWATT TECHNOLOGY K.K., Yokohama-shi, Kanagawa 226-0026 (JP)
(72) Inventor: IMOTO, Hiroshi, Yokohama-shi, Kanagawa 226-0026 (JP); OGATA, Ken, Yokohama-shi, Kanagawa 226-0026 (JP)
(74) Representative: Mewburn Ellis LLP
(86) International application number: PCT/JP2020/047945
(87) International publication number: WO 2022/137346

(57) **Abstract**

The purpose of the present invention is to provide a battery system particularly excellent in cycle characteristics. A battery system according to one embodiment is configured to include a lithium secondary battery and a charging device which charges the lithium secondary battery. The lithium secondary battery includes a positive electrode and a negative electrode not having a negative electrode active material. The charging device includes a power supply unit which supplies power for charging to the lithium secondary battery, and a charge control unit which controls the power supply unit so as to, after precharge to charge up to a predetermined precharge capacity by a predetermined precharge current, perform normal charge performing charging up to a normal capacity larger than the precharge capacity by a predetermined normal charge current higher than the precharge current. The precharge is performed before each of the repeated normal charges.

## Description

### Technical Field

The present invention relates to a battery system including a lithium secondary battery, and a charging device and a charging method for the battery.

### Background Art

The technology of converting natural energy such as solar light and window power into electric energy has recently attracted attentions. Under such a situation, various secondary batteries have been developed as a highly-safe power storage device capable of storing a lot of electric energy.

Among them, lithium secondary batteries which perform charge/discharge by transferring lithium ions between a positive electrode and a negative electrode are known to exhibit a high voltage and a high energy density. As typical lithium secondary batteries, there are known lithium-ion secondary batteries which have an active material capable of retaining a lithium element in a positive electrode and a negative electrode and perform charge/discharge by delivering or receiving lithium ions between a positive electrode active material and a negative electrode active material.

Further, for the purpose of increasing the energy density, a lithium secondary battery using a lithium metal instead of a material capable of inserting a lithium element such as a carbon-based material into a negative electrode active material has been developed. For example, Patent Document 1 provides a lithium secondary battery having an ultrathin lithium metal anode to achieve a volumetric energy density of greater than 1000 Wh/L and/or a mass energy density of greater than 350 Wh/kg when discharged at room temperature at a rate of at least 1 C. Patent Document 1 discloses that in such a lithium secondary battery, charging is performed by directly precipitating a further lithium metal on the lithium metal as a negative electrode active material.

Further, a lithium secondary battery which does not use a negative electrode active material has been developed for the purpose of further increasing the energy density and improving productivity. For example, Patent Document 2 discloses a lithium secondary battery including a positive electrode and a negative electrode, and a separation membrane and an electrolyte interposed therebetween. In the aforesaid negative electrode, metal particles formed on a negative electrode current collector are transferred from the positive electrode when the battery is charged and a lithium metal is formed on the negative electrode current collector in the negative electrode. Patent Document 2 discloses that such a lithium secondary battery shows the possibility of providing a lithium secondary battery which has overcome the problem due to the reactivity of the lithium metal and the problem caused during assembly and therefore has improved performance and service life.

### Citation List

### Patent Documents

Patent Document 1: Published Japanese Translation of PCT application No 2019-517722
Patent Document 2: Published Japanese Translation of PCT application No 2019-505971

### Summary

### Technical Problem

As a result of detailed investigation of conventional batteries including those described in the above patent documents, the present inventors have found that at least either one of their energy density, and the cycle characteristic is not sufficient.

For example, in a lithium secondary battery including a negative electrode having a negative electrode active material, it is difficult to sufficiently increase the energy density and capacity due to the volume and mass occupied by the negative electrode active material. Further, in an anode-free lithium secondary battery provided with a negative electrode having no conventional negative electrode active material, a dendrite-like lithium metal is likely to be formed on the surface of the negative electrode by repeated charging and discharging, and a short circuit and a capacity decrease are likely to occur. Therefore, the cycle characteristics are not sufficient.

As a result of extensive studies by the present applicant, it was found that the cycle characteristics could be improved by devising a charging method of the lithium secondary battery. An object of the present invention is to provide a battery system of a lithium secondary battery having excellent cycle characteristics by adopting a special charging method.

### Solution to Problem

A battery system according to one embodiment of the present invention includes a lithium secondary battery and a charging device which charges the lithium secondary battery. The lithium secondary battery includes a positive electrode and a negative electrode not having a negative electrode active material. The charging device includes a power supply unit which supplies power for charging to the lithium secondary battery, and a charge control unit which controls the power supply unit so as to, after precharge to charge up to a predetermined precharge capacity by a predetermined precharge current, perform normal charge performing charging up to a normal capacity larger than the precharge capacity by a predetermined normal charge current higher than the precharge current. The precharge is performed before each of the repeated normal charges.

In the above battery system, a lithium metal can be precipitated thinly and almost uniformly on the surface of the negative electrode by precharging using a precharge current. When normal charge is performed after this precharge, the lithium metal uniformly and thinly precipitated on the surface of the negative electrode is uniformly precipitated. Therefore, it is possible to make the precipitation of the lithium metal more uniform as compared with the case of conventional charging without precharge, which makes it possible to provide a battery system having excellent cycle characteristics.

In the above battery system, it is preferable that the precharge capacity is set to 0.025% or more and 0.5% or less of the normal capacity, and the precharge current is set to 0.001 C or more and 0.03C or less.

According to the above battery system, it is possible to provide a battery system which enables precharge particularly suitable for uniform precipitation of the lithium metal and has further excellent cycle characteristics.

In the above battery system, it is preferable that the time from the completion of precharge to the start of normal charge is set to 800 seconds or less.

According to the above battery system, it can be configured as a battery system capable of effectively utilizing the effect of precharge and having excellent cycle characteristics.

In the above battery system, it is preferably to configure the negative electrode as a copper foil. Also, the negative electrode may be configured to include a copper foil and carbon nanofibers provided on the copper foil. Further, the negative electrode may be configured to include a copper foil and either a metal layer not containing Li or an alloy layer not containing Li provided on the copper foil. Configuring the negative electrode as described above enables a configuration particularly excellent in the cycle characteristics.

There is provided a charging device according to one embodiment of the present invention, which charges a lithium secondary battery having a positive electrode and a negative electrode not having a negative electrode active material. The charging device includes a power supply unit which supplies power for charging to the lithium secondary battery, and a charge control unit which controls the power supply unit so as to, after precharge to charge up to a predetermined precharge capacity by a predetermined precharge current, perform normal charge performing charging up to a normal capacity larger than the precharge capacity by a predetermined normal charge current higher than the precharge current. The precharge is performed before each of the repeated normal charges.

There is provided a charging method according to one embodiment of the present invention, which charges a lithium secondary battery having a positive electrode and a negative electrode not having a negative electrode active material. The charging method includes a precharge step of performing charging up to a predetermined precharge capacity by a predetermined precharge current, and a normal charge step performed following the precharge step, of performing charging up to a normal capacity larger than the precharge capacity by a predetermined normal charge current higher than the precharge current. The precharge step is performed before each of the repeated normal charge steps.

According to the above charging device and charging method, it is possible to improve the cycle characteristics of a lithium secondary battery including a positive electrode and a negative electrode having no negative electrode active material.

### Advantageous Effects of Invention

According to the present invention, it is possible to provide a battery system of a lithium secondary battery excellent in cycle characteristics.

### Brief Description of Drawings

Fig. 1 is a block diagram showing an example of a schematic configuration of a battery system 1 according to an embodiment of the present invention.
Fig. 2 is a diagram showing an example of a schematic configuration of a secondary battery cell 101.
Fig. 3 is a flowchart showing an example of an operation flow of charging control by a BMS 400.
Fig. 4 is a diagram of a graph showing experimental results of an example and a comparative example.
Fig. 5 is a diagram showing an example of a schematic configuration of a modification of the secondary battery cell 101.

### Description of Embodiments

The embodiment of the present invention (which will hereinafter be called "present embodiment") will hereinafter be described in detail while referring to the drawings as needed. Incidentally, in the drawings, the same element will be represented by the same reference numeral and an overlapping description will be omitted. Unless otherwise specifically described, the positional relationship such as vertical or horizontal one will be based on the positional relationship shown in the drawings. Further, a dimensional ratio in the drawings is not limited to the ratio shown in the drawings.

### [Configuration of battery system]

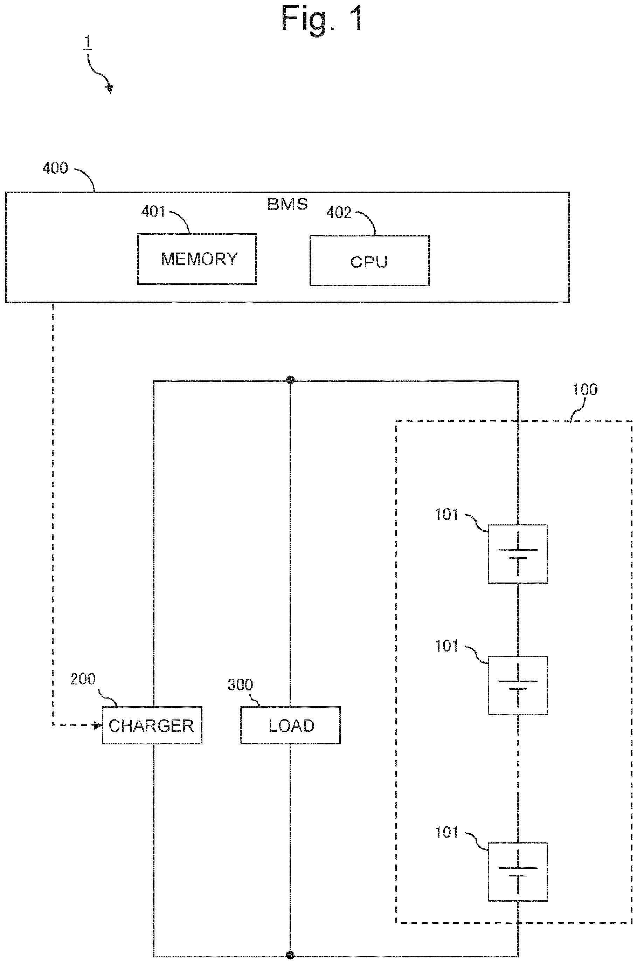

Fig. 1 is a block diagram showing an example of a schematic configuration of a battery system 1 according to an embodiment of the present invention.

The battery system 1 includes, for example, a lithium secondary battery 100, a charger 200, a load 300, and a battery management system (BMS) 400.

The lithium secondary battery 100 is configured to include a plurality of secondary battery cells 101 connected in series. The number of secondary battery cells 101 included in the lithium secondary battery 100 is not limited in particular. The plurality of secondary battery cells 101 may respectively have the same characteristics or may respectively have different characteristics. The secondary battery cells 101 included in the lithium secondary battery 100 do not necessarily have to be connected in series, or at least a part thereof may be connected in parallel. The details of the configuration of the secondary battery cell 101 will be described later.

The configuration of the charger 200 is not particularly limited, but for example, the charger 200 may be configured to be provided with a charging connector to which a charging plug connected to an external power source can be connected, and to convert the power supplied from the external power source to charging power of the secondary battery cell 101 of the lithium secondary battery 100. For example, the charger 200 functions as a current source which supplies a predetermined charge current to the lithium secondary battery 100. The current supplied by the charger 200 to the lithium secondary battery 100 is variable depending on the precharge current at the time of precharge and the normal charge current at the time of normal charge. The charger 200 controls the current supplied from the charger 200 to the lithium secondary battery 100. The secondary battery cell 101 is charged by the current supplied from the charger 200.

The configuration of the load 300 is not particularly limited, but may be configured as, for example, a drive device of an electric vehicle (electric car, hybrid car) or the like. The secondary battery cell 101 is connected to the load 300, for example, and can supply a current to the load 300 under the control of the BMS 400.

The BMS 400 is a controller including, for example, a memory 401 and a CPU 402, and controls charging and discharging of the secondary battery cell 101 included in the lithium secondary battery 100. The BMS 400 is a specific example of the "charge control unit" of the present invention. The configuration including the BMS 400 and the charger 200 is a specific example of the "charging device" of the present invention.

The memory 401 is comprised of, for example, a RAM, a ROM, a semiconductor memory, a magnetic disk device, an optical disk device, or a combination thereof, and stores a charge control program, a driver program, an operating system program, an application program, data, and the like which are used for processing by the CPU 402. The various programs may be installed in the memory 401 from a computer-readable portable recording medium such as a CD-ROM, a DVD-ROM using a known setup program or the like.

The CPU 402 includes one or a plurality of processors and their peripheral circuits, and comprehensively controls the overall operation of the BMS 400. The CPU 402 executes processing based on various programs including a charge control program, which are stored in the memory 401.

### [Configuration of secondary battery cell 101]

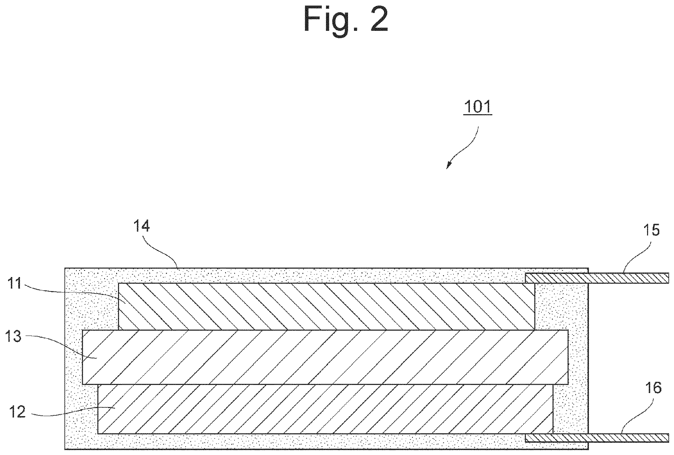

Fig. 2 is a diagram showing an example of a schematic configuration of the secondary battery cell 101. As shown in Fig. 2, the secondary battery cell 101 is a pouch cell in which a positive electrode 11, a negative electrode 12 having no negative electrode active material, and a separator 13 arranged between the positive electrode 11 and the negative electrode 12, etc. are sealed in an outer container 14. The pouch cell is configured so that a positive electrode terminal 15 and a negative electrode terminal 16 connected to the positive electrode 11 and the negative electrode 12 respectively extend to the outside of the outer container 14 and can be connected to an external circuit. The upper surface and the lower surface of the secondary battery cell 101 are flat surfaces, and the shape thereof is rectangular but is not limited thereto, and may be any shape (for example, circular shape, etc.) depending on the application and the like.

### (Positive electrode)

The positive electrode 11 is not particularly limited insofar as it has a positive electrode active material and as long as it is generally used for a lithium secondary battery, but a known material can be appropriately selected depending on the use of the lithium secondary battery. Since the positive electrode 11 has the positive electrode active material, the stability and the output voltage are high.

The term "positive electrode active material" as used herein means a material for retaining a lithium element (typically, lithium ion) on the positive electrode 11, and the material may also be called a host material for the lithium element (typically, lithium ion).

Such a positive electrode active material is not particularly limited and examples include metal oxides and metal phosphates. The aforesaid metal oxides are not particularly limited and examples include cobalt oxide-based compounds, manganese oxide-based compounds, and nickel oxide-based compounds, etc. The aforesaid metal phosphates are not particularly limited and examples include iron phosphate-based compounds and cobalt phosphate-based compounds. Examples of typical positive electrode active materials include LiCoO₂, LiNiₓCo_{y}Mn_{z}O (x+y+z=1), LiNiₓMn_{y}O (x+y=1), LiNiO₂, LiMn₂O₄, LiFePO, LiCoPO, LiFeOF, LiNiOF, and TiS₂. One or more of the aforesaid positive electrode active materials may be used either singly or in combination.

The positive electrode 11 may contain a component other than the aforesaid positive electrode active material. Such a component is not particularly limited and examples include known conductive additives, binders, solid polymer electrolytes, and inorganic solid electrolytes.

The conductive additive to be contained in the positive electrode 11 is not particularly limited and examples include carbon black, single wall carbon nanotube (SWCNT), multi-wall carbon nanotube (MWCNT), carbon nanofiber (CNF), and acetylene black. Further, the binder is not particularly limited and examples include polyvinylidene fluoride, polytetrafluoroethylene, styrene butadiene rubber, acrylic resins, and polyimide resins.

The content of the positive electrode active material in the positive electrode 11 may be, for example, 50 mass% or more and 100 mass% or less based on the total amount of the positive electrode 11. The content of the conductive additive in the total amount of the positive electrode 11 may be, for example, 0.1 mass% or more and 30 mass% or less. The content of the binder in the total amount of the positive electrode 11 may be, for example, 0.5 mass% or more and 30 mass% or less. The sum of the contents of the solid polymer electrolyte and the inorganic solid electrolyte in the total amount of the positive electrode 11 may be, for example, 0.5 mass% or more and 30 mass% or less.

The weight per unit area of the positive electrode 11 is, for example, 10-40 mg/cm². The thickness of the positive electrode active material layer is, for example, 30 to 150 µm. The density of the positive electrode 11 is, for example, 2.5 to 4.5 g/ml. The area capacity of the positive electrode 11 is, for example, 1.0 to 10.0 mAh/cm².

The thickness (length in the vertical direction) of the positive electrode 11 is preferably 20 µm or more and 150 µm or less, more preferably 40 µm or more and 120 µm or less, and further preferably 50 µm or more and 100 µm or less.

### (Negative electrode)

The negative electrode 12 has no negative electrode active material, that is, it does not contain lithium and an active material that hosts lithium. Therefore, the lithium secondary battery 100 has a smaller volume and mass of the entire battery and a higher energy density in principle than the lithium secondary battery including a negative electrode having a negative electrode active material. Here, the lithium secondary battery 100 is charged and discharged by precipitating a lithium metal on the negative electrode 12 and electrolytically eluting the precipitated lithium metal.

In the present embodiment, the term "lithium metal is precipitated on the surface of the negative electrode" means that a lithium metal is precipitated at at least one place on the surface of the negative electrode. Therefore, in the lithium secondary battery 100, the lithium metal may be precipitated on the surface of the negative electrode 12 (the interface between the negative electrode 12 and the separator 13), for example.

In the present specification, the term "negative electrode active material" means a material for retaining lithium ions or a lithium metal in the negative electrode 12, and may be replaced by the host material of the lithium element (typically lithium metal). The mechanism of such retaining is not particularly limited, and examples thereof include intercalation, alloying, and occlusion of metal clusters, etc., typically intercalation.

Such a negative electrode active material is not particularly limited, and examples thereof include lithium metals and alloys containing lithium metals, carbon-based materials, metal oxides, metals alloyed with lithium, and alloys containing the metals. The carbon-based material is not particularly limited, and examples thereof include graphene, graphite, hard carbon, mesoporous carbon, carbon nanotubes, and carbon nanohorns. The metal oxide is not particularly limited, and examples thereof include titanium oxide-based compounds, tin oxide-based compounds, and cobalt oxide-based compounds. The metal alloying with the lithium may include, for example, silicon, germanium, tin, lead, aluminum, and gallium.

In the present specification, the term "the negative electrode does not have a negative electrode active material" means that the content of the negative electrode active material in the negative electrode is 10 mass% or less based on the total amount of the negative electrode. The content of the negative electrode active material in the negative electrode is preferably 5.0 mass% or less and it may be 1.0 mass% or less, 0.1 mass% or less, or 0.0 mass% or less, each based on the total amount of the negative electrode. When the negative electrode does not have the negative electrode active material or the content of the negative electrode active material in the negative electrode is within the above range, the energy density of the lithium secondary battery 100 becomes high.

More specifically, the negative electrode 12 has a content of the negative electrode active material other than the lithium metal, which is 10 mass% or less, preferably 5.0 mass% or less, based on the total amount of the negative electrode regardless of the charging state of the battery. The content may be 1.0 mass% or less, 0.1 mass% or less, or 0.0 mass% or less. Further, the negative electrode 12 has a lithium metal content of 10 mass% or less, preferably 5.0 mass% or less, based on the total amount of the negative electrode, before the initial charge and/or at the end of the discharge. The content may be 1.0 mass% or less, 0.1 mass% or less, or 0.0 mass% or less.

Therefore, the "lithium secondary battery including a negative electrode having no negative electrode active material" can be replaced by an anode-free secondary battery, a zero-anode secondary battery, or an anodeless secondary battery. Further, the "lithium secondary battery including a negative electrode having no negative electrode active material" may be replaced by "a lithium secondary battery including a negative electrode having no negative electrode active material other than the lithium metal and having no lithium metal before the initial charge and/or at the end of the discharge" or "a lithium secondary battery including a negative electrode current collector having no lithium metal before the initial charge and/or at the end of the discharge".

In the present specification, the term "before the initial charge" of the battery means a state from the time when the battery is assembled to the time when the battery is charged for the first time. Further, the term "at the end of discharge" of the battery means a state in which the voltage of the battery is 1.0 V or more and 3.8 V or less.

Further, in the lithium secondary battery 100, the ratio M _{3.0}/M _{4.2} of a mass M _{3.0} of a lithium metal precipitated on the negative electrode 12 when the voltage of the battery is 3.0 V to a mass M _{4.2} of a lithium metal precipitated on the negative electrode 12 when the voltage of the battery is 4.2 V is M _{4.2,} is preferably 20% or less, more preferably 15% or less, and still more preferably 10% or less.

In a typical lithium secondary battery, the capacity of the negative electrode (capacity of the negative electrode active material) is set to be about the same as the capacity of the positive electrode (capacity of the positive electrode active material). In the lithium secondary battery 100, however, since the negative electrode 12 does not have the negative electrode active material which is the host material of the lithium element, it is not necessary to specify the capacity thereof. Therefore, since the lithium secondary battery 100 is not limited by the charge capacity due to the negative electrode, the energy density can be made high in principle.

The negative electrode 12 is not particularly limited insofar as it does not have a negative electrode active material and can be used as a current collector, but may include, for example, at least one selected from the group consisting of Cu, Ni, Ti, and Fe, other metals which do not react with Li, an alloy thereof, and a stainless steel (SUS). Incidentally, when SUS is used for the negative electrode 12, conventionally known various types can be used as the type of SUS. As the negative electrode material as described above, one type may be used alone or two or more types may be used in combination. Incidentally, in the present specification, the term "metal which does not react with Li" means a metal which does not react with lithium ions or the lithium metal to form an alloy under the operating conditions of the lithium secondary battery.

The negative electrode 12 is preferably comprised of at least one selected from the group consisting of Cu, Ni, Ti, and Fe, an alloy thereof, and the stainless steel (SUS), and is more preferably comprised of at least one selected from the group consisting of Cu and Ni, an alloy thereof, and the stainless steel (SUS). The negative electrode 12 is further preferably Cu, Ni, an alloy thereof or the stainless steel (SUS). When such a negative electrode is used, the energy density and productivity of the battery tend to be further improved.

The negative electrode 12 is an electrode which does not contain a lithium metal. Therefore, since it is not necessary to use a highly flammable and highly reactive lithium metal during production, the lithium secondary battery 100 is excellent in safety, productivity, and cycle characteristics.

The average thickness of the negative electrode 12 is preferably 4 µm or more and 20 µm or less, more preferably 5 µm or more and 18 µm or less, and still more preferably 6 µm or more and 15 µm or less. In such a mode, since the occupation volume of the negative electrode 12 in the lithium secondary battery 100 decreases, the lithium secondary battery 100 has a more improved energy density.

The area of the negative electrode 12 is preferably larger than the area of the positive electrode 11, and for example, the four sides thereof are configured to be slightly larger than the positive electrode 11 (for example, about 0.5 to 1.0 mm).

### (Separator)

The separator 13 is a member for separating the positive electrode 11 from the negative electrode 12 to prevent a short circuit of the battery and in addition, for securing the ionic conductivity of a lithium ion which serves as a charge carrier between the positive electrode 11 and the negative electrode 12. It is composed of a material not having electron conductivity and unreactive to the lithium ion. The separator 13 also has a role of retaining an electrolyte solution. No limitation is imposed on the separator 13 insofar as it plays the aforesaid role and examples include a porous polyethylene (PE) film, a polypropylene (PP) film, and a stacked structure of them.

The separator 13 may be covered with a separator cover layer. The separator cover layer may cover both of the surfaces of the separator 13 or may cover only one of them. The separator cover layer is not particularly limited insofar as it is a member having ionic conductivity and unreactive to a lithium ion and is preferably capable of firmly adhering the separator 13 to a layer adjacent to the separator 13. Such a separator cover layer is not particularly limited and examples include members containing a binder such as polyvinylidene fluoride (PVDF), a composite material (SBR-CMC) of styrene butadiene rubber and carboxymethyl cellulose, polyacrylic acid (PAA), lithium polyacrylate (Li-PAA), polyimide (PI), polyamideimide (PAI), or aramid. The separator cover layer may be a member obtained by adding, to the aforesaid binder, inorganic particles such as silica, alumina, titania, zirconia, magnesium oxide, magnesium hydroxide, or lithium nitrate. Incidentally, the separator 13 includes a separator having a separator cover layer.

The average thickness of the separator 13 is preferably 30 µm or less, more preferably 25 µm or less, and still more preferably 20 µm or less. In such a mode, the occupation volume of the separator 13 in the lithium secondary battery 100 decreases and therefore, the resulting lithium secondary battery 100 has a more improved energy density. The average thickness of the separator 13 is preferably 5 µm or more, more preferably 7 µm or more, and still more preferably 10 µm or more. In such a mode, the positive electrode 11 can be separated from the negative electrode 12 more reliably and the short circuit of the battery can be prevented further. The area of the separator 13 is preferably larger than the areas of the positive electrode 11 and the negative electrode 12.

### (Electrolyte solution)

The lithium secondary battery 100 preferably has an electrolyte solution. In the lithium secondary battery 100, the electrolyte solution may be infiltrated into the separator 13 or may be enclosed in a hermetically sealing container together with a stacked body of the positive electrode 11, the separator 13, and the negative electrode 12. The electrolyte solution contains an electrolyte and a solvent. It is a solution having ionic conductivity and serves as a conductive path of a lithium ion. Therefore, according to the mode including the electrolyte solution, the battery is further reduced in internal resistance and further improved in energy density, capacity, and cycle characteristics.

The electrolyte contained in the electrolyte solution is not particularly limited insofar as it is a salt and examples include salts of Li, Na, K, Ca, or Mg. As the electrolyte, a lithium salt is preferred. The lithium salt is not particularly limited and examples include Lil, LiCl, LiBr, LiF, LiBF₄, LiPF₆, LiAsF₆, LiSO₃CF₃, LiN(SO₂F)₂, LiN(SO₂CF₃)₂, LiN(SO₂CF₃CF₃)₂, LiBF₂(C₂O₄), LiB(O₂C₂H₄)₂, LiB(O₂C₂H₄)F₂, LiB(OCOCF₃)₄, LiNO₃, and Li₂SO₄. One or more of the aforesaid lithium salts may be used either singly or in combination.

The concentration of the electrolyte in the electrolyte solution is not particularly limited, but is preferably 0.5 M or more, more preferably 0.7 M or more, still more preferably 0.9 M or more, and still more preferably 1.0 M or more. When the concentration of the electrolyte is within the above range, the SEI layer is more likely to be formed, and the internal resistance tends to be lower. The upper limit of the concentration of the electrolyte is not particularly limited, and the concentration of the electrolyte may be 10.0 M or less, 5.0 M or less, or 2.0 M or less.

The solvent is not particularly limited and examples include dimethyl ether, diethylene glycol dimethyl ether, triethylene glycol dimethyl ether, acetonitrile, dimethyl carbonate, diethyl carbonate, ethyl methyl carbonate, ethylene carbonate, propylene carbonate, chloroethylene carbonate, fluoroethylene carbonate, difluoroethylene carbonate, trifluoromethyl propylene carbonate, methyl acetate, ethyl acetate, propyl acetate, methyl propionate, ethyl propionate, nonafluorobutyl methyl ether, nonafluorobutyl ethyl ether, tetrafluoroethyl tetrafluoropropyl ether, trimethyl phosphate, and triethyl phosphate. One or more of the aforesaid solvents may be used either singly or in combination.

### (Outer container)

The outer container 14 accommodates and hermetically seals the positive electrode 11, the negative electrode 12, the separator 13, the electrolytic solution, and the like of the secondary battery cell 101. As the material of the outer container 14, for example, a laminated film is used.

### (Positive electrode terminal and negative electrode terminal)

The positive electrode terminal 15 has one end which is connected to the upper surface of the positive electrode 11 (the surface opposite to the surface facing the separator 13) and extends to the outside of the outer container 14, and the other end connected to an external circuit (not shown). The negative electrode terminal 16 has one end which is connected to the lower surface of the negative electrode 12 (the surface opposite to the surface facing the separator 13) and extends to the outside of the outer container 14, and the other end connected to an external circuit (not shown). The material of the positive electrode terminal 15 and the negative electrode terminal 16 is not particularly limited insofar as it is conductive, and examples thereof include Al, Ni.

### [Charge control by BMS 400]

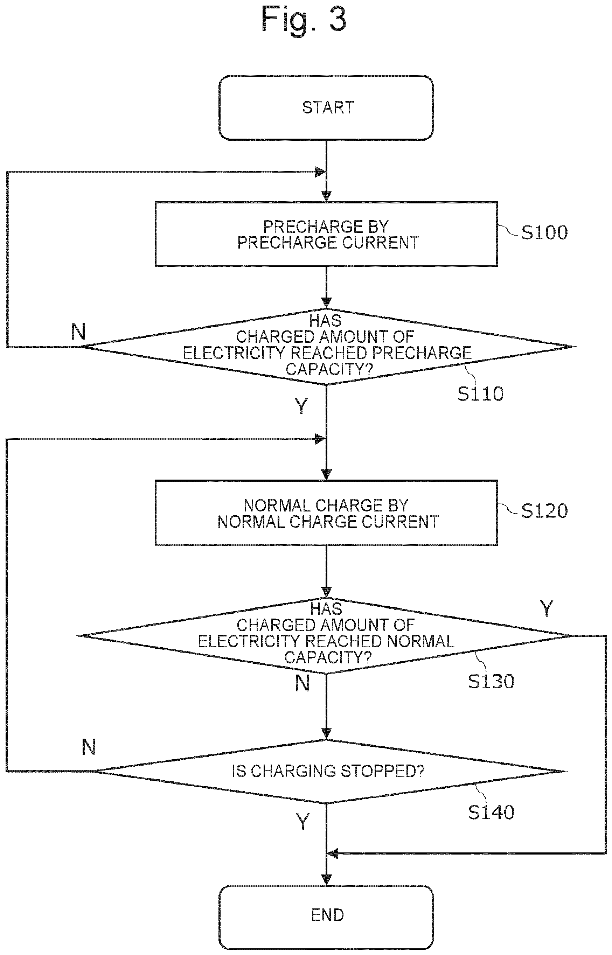

In the battery system 1 of the present embodiment, charge control is performed by the BMS 400 so that normal charge is performed after precharge is performed in the repeated charge cycle. Fig. 3 is a flowchart showing an example of an operation flow of charge control performed by the BMS 400 in the battery system 1. The charge control is performed by the CPU 402 executing a charge control program stored in the memory 401.

### (S100)

When the charge control is started, the BMS 400 starts precharge by supplying a predetermined precharge current as electric power for charging from the charger 200 to the lithium secondary battery 100 (S100). The precharge current is a current smaller than the normal charge current supplied to the lithium secondary battery 100 during the normal charge.

### (S110)

Next, the BMS 400 determines whether or not the charge amount charged in the lithium secondary battery 100 has reached a precharge capacity. The determination is made based on the time during which the precharge current is supplied to the lithium secondary battery 100, but is not limited thereto. For example, the determination may be made based on the result of an integral calculation of the precharge current and time given to the lithium secondary battery 100, or may be made by another method. However, a method of making the determination based on the time when the precharge current is given to the lithium secondary battery 100 is preferable because it can be realized by relatively easy processing. When the BMS 400 determines that the charge amount charged in the lithium secondary battery 100 has reached the precharge capacity (Y in S110), the BMS 400 moves to the processing of S120. If not (N in S110), the BMS 400 repeats the processing from S100 to S110.

### (S120)

Next, the BMS 400 stops applying the precharge current from the charger 200 to the lithium secondary battery 100, and starts the normal charge by supplying a predetermined normal charge current as electric power for charging (S120). The normal charge current is a current larger than the precharge current.

### (S130)

Next, the BMS 400 determines whether or not the charge amount charged in the lithium secondary battery 100 has reached the normal charge capacity (S130). The determination may be made based on the current or voltage value of the lithium secondary battery 100 or the secondary battery cell 101 included in the lithium secondary battery 100, or may be made by another well-known method. When the BMS 400 determines that the charge amount charged in the lithium secondary battery 100 has reached the normal charge capacity (Y in S130), the BMS 400 stops the supply of current from the charger 200 to the lithium secondary battery 100 to end charging. If not (N in S130), the BMS 400 moves to the processing of S140.

### (S140)

Next, the BMS 400 determines whether or not the charging has been stopped due to the charger 200 being removed from the lithium secondary battery 100 or the execution of an operation of stopping the charging (S140). If the charging is not stopped (N in S140), the BMS 400 repeats the processing from S120 to S140. When the charging is stopped (Y in S140), the BMS 400 stops supplying the current from the charger 200 to the lithium secondary battery 100 to end the charging.

In the above charge cycle, the normal charge of S120 to S140 is performed after the precharge of S100 and S110. A pause time may be provided between the precharge and the normal charge.

Note that the normal charge does not necessarily have to be the above method, and other conventional methods may be adopted.

### Examples

### [Charge/discharge cycle experiments]

Here, description will be made about examples and comparative examples of the charge/discharge cycle experiments in the present embodiment. In the examples and comparative examples, a secondary battery cell 101 having the configuration shown in Fig. 2 is manufactured, and then connected to a charger 200 and a load 300 as a lithium secondary battery 100 as shown in Fig. 1, and an experiment was conducted in which a charge/discharge cycle of precharge, normal charge, and discharge was repeated.

The outline of the manufactured secondary battery cell 101 is as follows. For the positive electrode, lithium nickelate (NCA) having an area of about 16 cm² and a thickness of about 74 µm was used. For the negative electrode, any of a configuration of only a copper foil (Cu foil) with an area of about 20.25 cm² and a thickness of about 8 µm, a configuration in which carbon nanofibers (CNF) were provided on a copper foil of the same size, and a configuration in which a 100 nm-thick Sn plate was provided on a copper foil of the same size was used. Incidentally, the Sn plate is an example of a metal layer containing no Li. The Sn plate may be replaced with another metal which does not contain Li. A microporous polyethylene film coated with PvDF was used as the separator. As the electrolyte solution, a 4.0 M LiFSI solution in which 4 mol of LiN (SO₂F)₂(LiFSI) was dissolved in dimethoxyethane (DME) was used. The rated capacity of the secondary battery cell 101 was taken to be 64 mAh.

At the time of precharge, a charging rate and a charging time were changed to various values. The charging rate is calculated based on the current during charge and the rated capacity of the secondary battery cell 101. In the normal charge after precharge, 6.4 mA and 4.2 V were supplied to the secondary battery cell 101 for a predetermined charging time, and the secondary battery cell 101 was charged to the precharge capacity by a constant current source. The precharge capacity is calculated by the charging rate or the current at the time of precharge and the charging time. A precharge capacity ratio is calculated based on the precharge capacity and the rated capacity of the secondary battery cell 101. The normal charge is performed after precharge, but in some examples and comparative examples, a pause time is provided between the precharge and the normal charge. At the time of discharge, the secondary battery cell 101 was operated as a constant current source of 6.4 mA and 3 V to discharge. Under such conditions, the number of cycles when the discharge capacity became 80% of the initial capacity was measured. Incidentally, in the above example, the charging rate and the precharge capacity ratio are calculated based on the rated capacity, but the rated capacity may be replaced with a predetermined capacity to be charged during the normal charge.

### [Examples 1 to 9 and Comparative Examples 1 to 8]

In Examples 1 to 9 and Comparative Examples 1 to 8, a secondary battery cell 101 having a configuration in which the negative electrode was only a copper foil was used. The conditions and experimental results of Examples 1 to 9 and Comparative Examples 1 to 8 are shown in Table 1 below.

**Table 1**

| | Negative electrode | Current (mA) | Charging rate (C) | Charging time (sec) | Precharge capacity (mAh) | Precharge capacity ratio (%) | Pause time (sec) | Number of cycles (times) |
|---|---|---|---|---|---|---|---|---|
| Example 1 | Copper foil | 0.2 | 0.0031 | 600 | 0.033 | 0.052 | 0 | 109 |
| Example 2 | Copper foil | 0.2 | 0.0031 | 3000 | 0.167 | 0.260 | 0 | 137 |
| Example 3 | Copper foil | 0.2 | 0.0031 | 4800 | 0.267 | 0.417 | 0 | 137 |
| Example 4 | Copper foil | 0.1 | 0.0016 | 600 | 0.017 | 0.026 | 0 | 101 |
| Example 5 | Copper foil | 1 | 0.0156 | 60 | 0.017 | 0.026 | 0 | 102 |
| Example 6 | Copper foil | 1 | 0.0156 | 600 | 0.167 | 0.260 | 0 | 124 |
| Example 7 | Copper foil | 1 | 0.0156 | 900 | 0.250 | 0.391 | 0 | 120 |
| Example 8 | Copper foil | 1 | 0.0156 | 600 | 0.167 | 0.260 | 60 | 120 |
| Example 9 | Copper foil | 1 | 0.0156 | 600 | 0.167 | 0.260 | 780 | 105 |
| Comparative Example 1 | Copper foil | 0.2 | 0.0031 | 120 | 0.007 | 0.010 | 0 | 71 |
| Comparative Example 2 | Copper foil | 0.2 | 0.0031 | 6000 | 0.333 | 0.521 | 0 | 93 |
| Comparative Example 3 | Copper foil | 0.03 | 0.0005 | 2000 | 0.017 | 0.026 | 0 | 60 |
| Comparative Example 4 | Copper foil | 2 | 0.0313 | 30 | 0.017 | 0.026 | 0 | 73 |
| Comparative Example 5 | Copper foil | 0.03 | 0.0005 | 600 | 0.005 | 0.008 | 0 | 56 |
| Comparative Example 6 | Copper foil | 2 | 0.0313 | 600 | 0.333 | 0.521 | 0 | 77 |
| Comparative Example 7 | Copper foil | 10 | 0.1563 | 42 | 0.117 | 0.182 | 0 | 55 |
| Comparative Example 8 | Copper foil | 1 | 0.0156 | 600 | 0.167 | 0.260 | 900 | 95 |

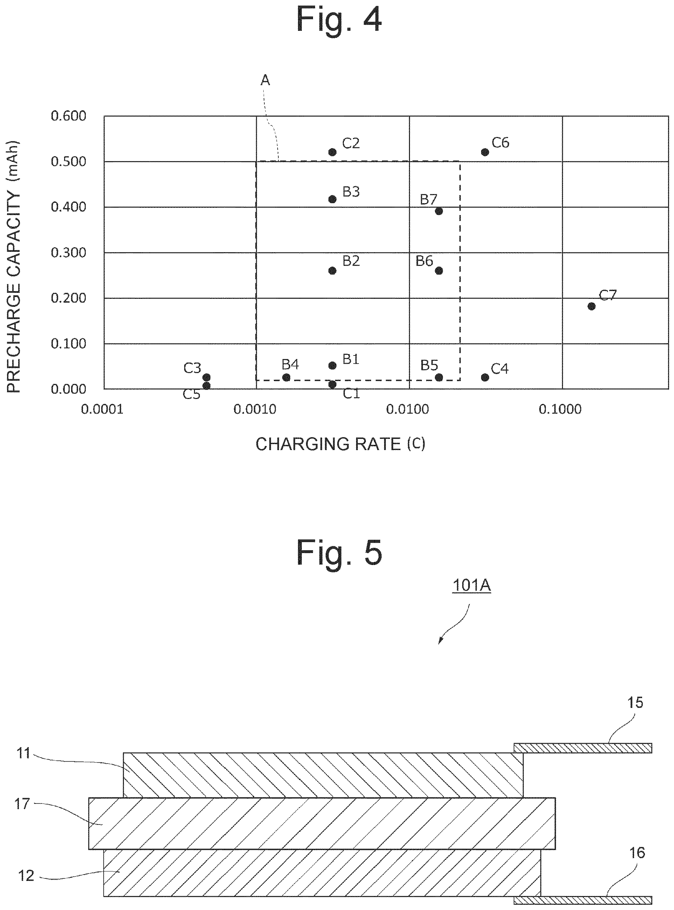

Fig. 4 is a graph showing the experimental results of Examples 1 to 9 and Comparative Examples 1 to 8 shown in Table 1. In Fig. 4, the results corresponding to Examples 1 to 7 are shown as B1 to B7, respectively, and the results corresponding to Comparative Examples 1 to 7 are shown as C1 to C7, respectively. According to the experimental results, under the conditions included in a region A in Fig. 4, the number of cycles until the discharge capacity becomes 80% of the initial capacity is 100 times or more. That is, the precharge capacity is set to 0.016 mAh or more and 0.32 mAh or less, the precharge capacity ratio is set to 0.025% or more and 0.5% or less, and the precharge current is set to 0.001 C or more and 0.03 C or less. Consequently, it was possible to obtain excellent results in which the number of cycles until the discharge capacity became 80% of the initial capacity was 100 or more. This is because the lithium metal could be precipitated thinly and almost uniformly on the surface of the negative electrode by precharge using the precharge current. When the normal charge is performed after the precharge, the lithium metal uniformly and thinly precipitated on the surface of the negative electrode is uniformly precipitated. Therefore, it is possible to make the precipitation of the lithium metal more uniform as compared with the case of conventional charging without precharging, and consequently, excellent cycle characteristics can be obtained.

Incidentally, when the rated capacity of the secondary battery cell 101 changes, it is preferable to increase or decrease the precharge capacity in proportion to the increase or decrease in the capacity and perform precharge up to the precharge capacity ratio (%) as described above. Similarly, when the rated capacity of the secondary battery cell 101 changes, it is preferable to increase or decrease the current value at the time of precharge in proportion to the increase or decrease in the capacity and perform precharge at the charging rate (C) as described above.

Further, the following results were obtained for the pause time between the precharge and the normal charge. That is, when the pause times were 60 seconds and 780 seconds, respectively, as in Examples 8 and 9, the number of cycles until the discharge capacity became 80% of the initial capacity was 100 or more, but when the pause time was 900 seconds as in Example 8, the number of cycles until the discharge capacity became 80% of the initial capacity was less than 100. That is, the pause time may be provided between the precharge and the normal charge, but if the pause time is lengthened by a predetermined time or more such as 800 seconds or more, the effect of improving the cycle characteristics by the precharge becomes thin. Therefore, the pause time between the precharge and the normal charge is preferably set to a predetermined time or less, and is preferably 800 seconds or less, for example. Further, it is preferable to start the normal charge immediately after the precharge because the effect of improving the cycle characteristics by precharge can be maintained, and the charging time does not need to be longer than necessary.

### [Examples 10 to 13 and Comparative Examples 9 to 12]

In Examples 10 to 13 and Comparative Examples 9 to 12, a secondary battery cell 101 having a configuration in which carbon nanofibers (CNF) were provided on a copper foil as one for the negative electrode was used. The conditions and experimental results of Examples 10 to 13 and Comparative Examples 9 to 12 are shown in Table 2 below.

**Table 2**

| | Negative electrode | Current (mA) | Charging rate (c) | Charging time (sec) | Precharge capacity (mAh) | Precharge capacity ratio (%) | Pause time (sec) | Number of cycles (times) |
|---|---|---|---|---|---|---|---|---|
| Example 10 | Copper foil+CNF | 0.2 | 0.0031 | 600 | 0.033 | 0.052 | 0 | 111 |
| Example 11 | Copper foil+CNF | 0.2 | 0.0031 | 4800 | 0.267 | 0.417 | 0 | 140 |
| Example 12 | Copper foil+CNF | 0.1 | 0.0016 | 600 | 0.017 | 0.026 | 0 | 104 |
| Example 13 | Copper foil+CNF | 1 | 0.0156 | 60 | 0.017 | 0.026 | 0 | 106 |
| Comparative Example 9 | Copper foil+CNF | 0.2 | 0.0031 | 120 | 0.007 | 0.010 | 0 | 75 |
| Comparative Example 10 | Copper foil+CNF | 0.2 | 0.0031 | 6000 | 0.333 | 0.521 | 0 | 95 |
| Comparative Example 11 | Copper foil+CNF | 0.03 | 0.0005 | 2000 | 0.017 | 0.026 | 0 | 63 |
| Comparative Example 12 | Copper foil+CNF | 2 | 0.0313 | 30 | 0.017 | 0.026 | 0 | 76 |

### [Examples 14 to 17 and Comparative Examples 13 to 16]

In Examples 14 to 17 and Comparative Examples 13 to 16, a secondary battery cell 101 having a configuration in which a 100 nm-thick Sn plate was provided on a copper foil as one for the negative electrode was used. The conditions and experimental results of Examples 14 to 17 and Comparative Examples 13 to 16 are shown in Table 3 below.

**Table 3**

| | Negative electrode | Current (mA) | Charging rate (c) | Charging time (sec) | Precharge capacity (mAh) | Precharge capacity ratio (%) | Pause time (sec) | Number of cycles (times) |
|---|---|---|---|---|---|---|---|---|
| Example 14 | Copper foil+100nm Sn plating | 0.2 | 0.0031 | 600 | 0.033 | 0.052 | 0 | 114 |
| Example 15 | Copper foil+100nm Sn plating | 0.2 | 0.0031 | 4800 | 0.267 | 0.417 | 0 | 142 |
| Example 16 | Copper foil+100nm Sn plating | 0.1 | 0.0016 | 600 | 0.017 | 0.026 | 0 | 107 |
| Example 17 | Copper foil+100nm Sn plating | 1 | 0.0156 | 60 | 0.017 | 0.026 | 0 | 108 |
| Comparative Example 13 | Copper foil+100nm Sn plating | 0.2 | 0.0031 | 120 | 0.007 | 0.010 | 0 | 77 |
| Comparative Example 14 | Copper foil+100nm Sn plating | 0.2 | 0.0031 | 6000 | 0.333 | 0.521 | 0 | 96 |
| Comparative Example 15 | Copper foil+100nm Sn plating | 0.03 | 0.0005 | 2000 | 0.017 | 0.026 | 0 | 67 |
| Comparative Example 16 | Copper foil+100nm Sn plating | 2 | 0.0313 | 30 | 0.017 | 0.026 | 0 | 79 |

It can be seen from the results of Examples 10 to 17 and Comparative Examples 9 to 16 that even if the negative electrode material is changed within the range of the present embodiment, the same results as those of Examples 1 to 9 and Comparative Examples 1 to 8 can be obtained.

### [Modification example]

The above-described embodiments are examples for explaining the present invention. They do not intend to limit the present invention only thereto, and the present invention can be modified in various ways insofar as it does not depart from the gist thereof.

For example, the secondary battery cell may have a solid electrolyte layer instead of a separator. Fig. 5 is a schematic cross-sectional view of a secondary battery cell 101A according to the modification example. As shown in Fig. 5, the secondary battery cell 101A is a solid-state battery in which a solid electrolyte layer 17 is formed between a positive electrode 11 and a negative electrode 13. The secondary battery cell 101A corresponds to the secondary battery cell 101 (Fig. 2) according to the embodiment, in which the separator 13 is changed to the solid electrolyte layer 17 and does not have an outer container.

Generally, in a battery equipped with a liquid electrolyte, the physical pressure applied from the electrolyte to the surface of the negative electrode tends to differ depending on the location due to the fluctuation of liquid. On the other hand, since the secondary battery cell 101A includes the solid electrolyte layer 17, the pressure applied to the surface of the negative electrode 12 becomes more uniform, and the shape of a carrier metal precipitated on the surface of the negative electrode 12 can be made more uniform. Consequently, since the carrier metal precipitated on the surface of the negative electrode 12 is further suppressed from growing in a dendrite shape, the cycle characteristics of the secondary battery (secondary battery cell 101A) become more excellent.

As the solid electrolyte layer 17, a known material can be appropriately selected depending on the use of the secondary battery and the type of carrier metal. The solid electrolyte constituting the solid electrolyte layer 17 preferably has ionic conductivity and no electron conductivity. Thus, it is possible to reduce the internal resistance of the secondary battery cell 101A and suppress a short circuit inside the secondary battery cell 101A. As a result, the energy density, capacity, and cycle characteristics of the secondary battery (secondary battery cell 101A) can be improved.

Examples of the solid electrolyte layer 17 include those containing a resin and a salt. Such a resin is not particularly limited and examples include resins having an ethylene oxide unit in the main chain and/or side chain, acrylic resins, vinyl resins, ester resins, nylon resins, polysiloxane, polyphosphazene, polyvinylidene fluoride, polymethyl methacrylate, polyamide, polyimide, aramid, polylactic acid, polyethylene, polystyrene, polyurethane, polypropylene, polybutylene, polyacetal, polysulfone, and polytetrafluoroethylene, etc. One or more of the aforesaid resins may be used either singly or in combination.

The salt contained in the solid electrolyte layer 17 is not particularly limited and examples thereof include salts of Li, Na, K, Ca, or Mg. The lithium salt is not particularly limited and examples include Lil, LiCl, LiBr, LiF, LiBF₄, LiPF₆, LiAsF₆, LiSO₃CF₃, LiN(SO₂F)₂, LiN(SO₂CF₃)₂, LiN(SO₂CF₃CF₃)₂, LiB(O₂C₂H₄)₂, LiB(O₂C₂H₄)F₂, LiB(OCOCF₃)₄, LiNO₃, and Li₂SO₄. One or more of the aforesaid lithium salts may be used either singly or in combination.

Generally, the content ratio of the lithium salt to the resin in the solid electrolyte layer is determined by a ratio ([Li]/[O]) of lithium atoms which the lithium salt has to oxygen atoms which the resin has. The content ratio of the lithium salt to the resin in the solid electrolyte layer 17 may be adjusted so that the aforesaid ratio ([Li]/[O]) is preferably 0.02 or more and 0.20 or less, more preferably 0.03 or more and 0.15 or less, and still more preferably 0.04 or more and 0.12 or less.

The solid electrolyte layer 17 may contain a component other than the aforesaid resin and salt. For example, it may contain, for example, an electrolyte solution similar to the electrolyte solution which can be contained in the secondary battery cell 101. Incidentally, in this case, it is preferable to seal the secondary battery cell 101A with an outer container.

The solid electrolyte layer 17 preferably has a certain thickness from the viewpoint of reliably separating the positive electrode and the negative electrode. On the other hand, it is preferable to suppress the thickness to be constant or less from the viewpoint of increasing the energy density of the secondary battery (secondary battery cell 101A). Specifically, the average thickness of the solid electrolyte layer 17 is preferably 5 µm to 20 µm, more preferably 7 µm to 18 µm or less, and further preferably 10 µm to 15 µm.

Incidentally, in the present specification, "the solid electrolyte" embraces a gel electrolyte. The gel electrolyte is not particularly limited and examples include those containing a high molecule, an organic solvent, and a lithium salt. The high molecule in the gel electrolyte is not particularly limited and examples include copolymers of polyethylene and/or polyethylene oxide, polyvinylidene fluoride, and copolymers of polyvinylidene fluoride and hexafluoropropyrene.

Further, for example, the secondary battery cell 101 may have a current collector arranged so as to be in contact with the positive electrode or the negative electrode. In this case, a positive electrode terminal and a negative electrode terminal are connected to the current collector. The current collector is not particularly limited and examples include a current collector usable as a negative electrode material. Incidentally, when the secondary battery cell 101 does not have the current collector, the negative electrode and the positive electrode themselves serve as current collectors, respectively.

Further, for example, in the secondary battery cell 101, the negative electrode, the separator or the solid electrolyte layer, and the positive electrode may be stacked in multiple layers to improve the capacity and output voltage of the battery. The number of layers is, for example, 3 or more, preferably 10 to 30.

The term "the energy density is high" as used herein means that the capacity of the battery per total volume or total mass is high. It is preferably 800 Wh/L or more or 350 Wh/kg or more, more preferably 900 Wh/L or more or 400 Wh/kg or more, and still more preferably 1000 Wh/L or more or 450 Wh/kg or more.

The embodiments described above are for facilitating the understanding of the present invention, and are not intended to limit the interpretation of the present invention. Each element included in the embodiment and its arrangement, material, condition, shape, size, and the like are not limited to those exemplified, and can be appropriately changed. Further, it is possible to partially replace or combine the configurations shown in the different examples.

### Industrial Applicability

The lithium secondary battery of the present invention has a high energy density and an excellent cycle characteristic so that it has industrial applicability as a power storage device to be used for various uses.

### Reference Signs List

1 ... battery system, 100 ... lithium secondary battery, 101, 101A ... secondary battery cell, 200 ... charger, 300 ... load, 400 ... BMS, 401 ... memory, 402 ... CPU, 11 ... positive electrode, 12 ... negative electrode, 13 ... separator, 14 ... outer container, 15 ... positive electrode terminal, 16 ... negative electrode terminal, 17 ... solid electrolyte layer

## Claims

1. A battery system, comprising:
a lithium secondary battery; and
a charging device which charges the lithium secondary battery,
wherein the lithium secondary battery includes:
a positive electrode, and
a negative electrode not having a negative electrode active material,
wherein the charging device includes:
a power supply unit which supplies power for charging to the lithium secondary battery, and
a charge control unit which controls the power supply unit so as to, after precharge to charge up to a predetermined precharge capacity by a predetermined precharge current, perform normal charge performing charging up to a normal capacity larger than the precharge capacity by a predetermined normal charge current higher than the precharge current, and
wherein the precharge is performed before each of the repeated normal charges.

2. The battery system according to claim 1, wherein the precharge capacity is 0.025% or more and 0.5% or less of the normal capacity, and
wherein the precharge current is 0.001C or more and 0.03C or less.

3. The battery system according to claim 1 or 2, wherein the time from the completion of the precharge to the start of the normal charge is 800 seconds or less.

4. The battery system according to any one of claims 1 to 3, wherein the negative electrode is a copper foil.

5. The battery system according to any one of claims 1 to 3, wherein the negative electrode is configured to include a copper foil and carbon nanofibers provided on the copper foil.

6. The battery system according to any one of claims 1 to 3, wherein the negative electrode is configured to include a copper foil and either a metal layer not containing Li or an alloy layer not containing Li provided on the copper foil.

7. A charging device charging a lithium secondary battery having a positive electrode and a negative electrode not having a negative electrode active material, comprising:
a power supply unit which supplies power for charging to the lithium secondary battery, and
a charge control unit which controls the power supply unit so as to, after precharge to charge up to a predetermined precharge capacity by a predetermined precharge current, perform normal charge performing charging up to a normal capacity larger than the precharge capacity by a predetermined normal charge current higher than the precharge current,
wherein the precharge is performed before each of the repeated normal charges.

8. A charging method of charging a lithium secondary battery having a positive electrode and a negative electrode not having a negative electrode active material, comprising:
a precharge step of performing charging up to a predetermined precharge capacity by a predetermined precharge current; and
a normal charge step performed following the precharge step, of performing charging up to a normal capacity larger than the precharge capacity by a predetermined normal charge current higher than the precharge current,
wherein the precharge step is performed before each of the repeated normal charge steps.
